# EUROPEAN PATENT APPLICATION

(11) **EP 4 660 016 A1**
(43) Date of publication of application: **10.12.2025**
(21) Application number: 24290018.1
(22) Date of filing: 07.06.2024
(51) Int. Cl.: B60R 16/02, H02G 3/22, F16L 5/10, H02G 3/08, H01B 17/58

(54) **GROMMET AND CABLE BUSHING AND METHOD FOR PRODUCING THE CABLE BUSHING**

(71) Applicant: Leoni Wiring Systems France, 78180 Montigny le Bretonneux (FR)
(72) Inventor: Mathey, Jean-Marc, FR-92380 Garches (FR)
(74) Representative: FDST Patentanwälte

(57) **Abstract**

According to the invention the Grommet (14) is designed for a wall bushing (2) and for the sealed passage of a strand (12), in particular a cable, through an opening (10) in a wall (4). The wall (4) is especially a wall (4) of a dash panel of a motor vehicle. The grommet (14) having a grommet body (16) which extends in an insertion direction (E) and which has a proximal sealing section (18) and a distal sealing section (20), which, in the assembled state, receive the wall (4) between them, wherein the distal sealing section (20) is corrugated in the circumferential direction so that it is compressible and can be inserted through the opening (10) in the insertion direction (E). Preferably the distal sealing section (20) comprises a cap element (22) having a cap opening (23) and during assembly the grommet is inserted through the opening (10), while the cap opening (23) is oriented in the insertion direction (E). Afterwards the cap element (22) is folded over such that the cap opening (23) is oriented towards the wall (4) and a distal sealing lip (24) rests on a distal wall side (4B).

## Description

The invention relates to a grommet, in particular for a vehicle, a wall bushing with such a grommet and a method for producing such a wall bushing.

The grommet is used to feed a strand, in particular an electrical cable, through an opening in a wall In a sealed manner. In the present case, this is the wall of a dashboard. The grommet has a proximal sealing section with a proximal sealing lip, which seals a proximal side of the wall when installed. Spaced apart from this in the axial direction, the grommet has a distal sealing section, in particular in the form of a cap, which in particular has a distal sealing lip. The distal sealing section seals a distal wall side. The wall is therefore arranged between the two opposing sealing sections in the assembled state.

During assembly, the grommet is partially inserted through the opening in an axial direction, i.e. in an insertion direction. The distal sealing section is inserted through the opening. As the distal sealing section has a larger dimension than the opening, it must be compressed.

A grommet of this type can be found, for example, in EP 4 148 310 A1. Here, the proximal sealing lip is designed as a resilient sealing lip.

The distal sealing section is also referred to as an acoustic sealing section and the distal sealing lip as an acoustic sealing lip. The acoustic sealing section is used in particular for acoustic sealing. Typically, but not necessarily the wall has an insulation, in particular an acoustic insulation and the acoustic sealing lip rests on this acoustic insulation.

Installation is sometimes complex, as the acoustic sealing section with the cap-like element must be pressed through the opening. At the same time, it must be ensured that the acoustic sealing lip seals reliably in the installed position.

To ensure this, auxiliary tabs are sometimes arranged on the acoustic sealing section, which protrude in the direction of insertion and which can be gripped manually for installation.

It is a task of the invention to provide an improved grommet in which assembly in particular is simplified.

According to the invention, the grommet has a grommet body which extends in an insertion direction and therefore in axial direction. The grommet body has a proximal side and a distal side with a distal sealing section and in particular with a distal sealing lip. Preferably the grommet body has at the proximal side a proximal sealing section, in particular with a proximal sealing lip.

The grommet is generally used for the sealed feed-through of a strand, in particular an electrical cable, through an opening in a wall. The strand extends in the axial direction. In particular, the wall is the wall of a vehicle dashboard. In general, this is a motor vehicle grommet, which is therefore installed in a motor vehicle in its final assembled state. The distal sealing section seals a distal wall side of the wall, especially the distal sealing lip rests on the distal wall side in the assembled state. In the preferred embodiment with additionally a proximal sealing section, the two sealing sections accommodate the wall between them in the assembled state. The distal sealing section is larger than the opening. In the case of a circular opening, the distal sealing section therefore has a larger radius than the opening. At least a part of the proximal side of the grommet body remains at a proximal side of the wall.

The distal sealing section can generally be inserted through the opening in the direction of insertion. For this purpose, it is elastic and compressible. According to the invention, the distal sealing section is corrugated in the circumferential direction and has a corrugated structure. The corrugated structure allows that at least some sections of the distal sealing section can be folded in the circumferential direction. The circumferential direction is the direction surrounding the axial direction.

The particular advantage of this design is the simplified, elastic compressibility of the distal sealing section, so that it can be easily inserted through the opening. Due to the specific design, folding zones are formed in the circumferential direction, so that the distal sealing section can be folded in the circumferential direction and then unfolded again. In particular, the distal sealing section is formed in the circumferential direction in the manner of an accordion or bellows.

In particular, the distal sealing section is only corrugated in the circumferential direction and not in the axial direction.

This corrugated design simplifies installation, especially with shorter installation times. At the same time, a secure sealing is also reliably achieved. In particular, the additional auxiliary tabs mentioned above have been dispensed with and material is saved. These auxiliary tabs are conventionally attached to the distal sealing section and are used to pull it through the opening during assembly.

According to the invention, a wall bushing is also provided which has a wall with an opening through which a strand and, in particular, an electrical cable is passed in a sealed manner with the aid of such a grommet.

According to the invention, a method for producing such a wall bushing is also provided. In this method, the grommet is passed through the opening with the distal sealing section in front. The distal sealing section seals the distal wall side.

The distal sealing section is, in particular, an acoustic sealing section and the wall has, in particular but not necessarily, an (acoustic) insulation that is specially attached to a sheet-like mounting plate, which is usually made of metal. The distal sealing section rests especially on this insulation with its distal sealing lip (acoustic sealing lip).

The advantages and preferred embodiments mentioned with regard to the grommet can also be applied in principle to the wall bushing and/or the method.

In a preferred embodiment, the corrugated structure is characterised by the fact that it has alternating corrugated sections in the circumferential direction, which are arranged around the entire circumference, preferably evenly distributed. The corrugated sections are usually elevations and depressions.

Insofar as the term undulating or corrugated is used in the present case, this is generally understood to mean a structure in which at least one and preferably both outer sides of the distal sealing section alternately form elevations and depressions in the circumferential direction. In the preferred embodiment, these are evenly distributed and also over the entire circumference. However, this is not absolutely necessary. In principle, it is also possible, for example, for a corrugated structure to be formed only in some circumferential sections and for other circumferential sections to be smooth. A decisive factor is that the undulating structure creates folding zones in the circumferential direction so that the distal sealing section can be compressed more easily in the circumferential direction.

In a preferred embodiment, the corrugated sections are formed by thicker wall sections on the one hand and thinner wall sections on the other, with the thinner wall sections having a reduced wall thickness compared to the thicker wall sections. The distal sealing section can be easily folded together, especially in the area of the thinner wall sections. These thinner wall sections in particular form folding zones.

Preferably, 20-50 and, for example, 25-40 corrugated sections are distributed around the circumference. These corrugated sections are defined by the elevations and depressions. In the circumferential direction, the corrugated sections, at least the corrugated sections of the same type (i.e. either elevations or depressions), in particular have the same width, and therefore extend over the same angular range. Alternatively, the elevations on the one hand and depressions on the other have different widths.

Preferably, the corrugated sections have a varying width perpendicular to the circumferential direction and thus in the direction of insertion / in the axial direction. In a preferred embodiment, the corrugated sections, in particular the depressions (alternatively the elevations), are bulbous and preferably rhombic. Perpendicular to the circumferential direction and thus in the direction of insertion or axial direction, the corrugated sections therefore initially widen to a maximum width and then taper again. This particularly supports the desired foldability. While one type of corrugated section, for example the depressions, is bulbous in the middle, the other type of the corrugated section has a corresponding constriction in the middle.

As already explained above, the term corrugated is to be understood very generally. Viewed in cross-section perpendicular to the insertion direction, the sealing section has a crenellated structure according to a first variant. This is understood to mean a sequence of elevations and depressions with a rectangular cross-section. The individual elevations and depressions can be rounded in the corner areas.

According to an alternative embodiment, the distal sealing section has a triangular or V-shaped structure when viewed in cross-section. In this case, the individual corrugated sections (elevations and depressions) are each formed by triangles, whereby these are preferably of the same size. The individual corner points at which the triangles adjoin each other form fold lines along which the distal sealing section can be folded together in the circumferential direction.

According to a further alternative embodiment, the distal sealing section has a wave-shaped structure. This is understood to mean that the elevations and depressions are each formed by curved lines when viewed in cross-section. For example, the distal sealing section is sinusoidal when viewed in cross-section.

In principle, a variety of corrugated structures are possible that allow the distal sealing section to be easily compressed and folded in the circumferential direction.

In a preferred embodiment, the distal sealing section has a cap element. This is generally understood to mean that the sealing section also extends in the axial direction and thus in the insertion direction in the manner of a cap and widens in the axial direction. The cap element has a cap opening, the circumferential edge of which forms a distal sealing lip, In the assembled state, the distal sealing section lies in particular only with this distal sealing lip on a distal wall side of the wall.

In a preferred design, an inner part of the cap element merges into a base element, which preferably has a passage opening for the strand. Therefore, the cap element adjoins the base element. In particular, a guide sleeve is formed on this base element, which extends in the axial direction and through which the strand is guided in a sealed manner.

In general, the strand is guided in a sealed manner through the proximal sealing section as well as through the distal sealing section.

The cap element generally extends in the axial direction from the base element in the direction of the cap opening and widens at the same time. For example, the cap element is - viewed in a cross section - arc shaped. In a preferred embodiment, the cap element is designed in such a way and adjoins the base element in such a way that the cap element and therefore the cap opening is foldable from an installation position into a sealing position. By foldable it is understood that the cap opening can be moved ("folded") from the installation position, in which the cap opening is orientated in the insertion direction, into the sealing position, in which the cap opening is orientated in the opposite direction to the insertion direction. In the sealing position, the cap opening is orientated specifically in the direction of the wall. In particular, the distal sealing lip, i.e. the peripheral edge of the cap opening, lies against the distal side of the wall in the assembled state.

The cap element and thus the grommet are preferably designed in such a way that the cap element snaps elastically from the installation position into the sealing position. In particular, the installation position and the sealing position each form stable positions in which the cap element remains unless it is moved to the other position by the action of an external force. At the same time, the material properties and, in particular, the shape of the cap element cause it to snap over elastically.

This design facilitates assembly. During assembly and thus in the method according to the invention, the cap element is in the installation position before and during insertion through the opening. In this installation position, the cap element can simply be compressed and passed through the opening. The cap element is then folded backwards into the sealing position. Preferably, it only needs to be excited briefly to snap into the sealing position. At the same time, this elastic snap-back ensures that the distal sealing lip (acoustic sealing lip) lies reliably against the wall.

This concept for manufacturing the wall bushing, in which the cap element is initially in the installation position and is then folded down after being fed through, is regarded as an independently inventive solution. This concept is therefore independent of the corrugated design of the distal sealing section. The right is reserved to file a divisional application for this independent inventive aspect based on claim 15 or on claim 10. For example, a grommet with the features of claim 1 is therefore used for a corresponding inventive method based on claim 15, but without the characterising feature that the distal sealing section is corrugated in the circumferential direction.

In particular, the installation position is a prefabricated position that the grommet assumes immediately after manufacture. This is understood to mean that the installation position is a normal position that the grommet assumes during and after manufacture. The grommet is usually formed by a casting process, whereby the material of the grommet is inserted in a mould for this purpose. The mould is designed in such a way that the grommet and in particular the cap element is produced in the installation position.

This saves time during production, especially during assembly and installation. The grommet can be inserted directly through the opening during subsequent assembly without any additional measures.

The cap element has a circumferential edge at the cap opening, which forms the aforementioned distal sealing lip (acoustic sealing lip). In the assembled state, the distal sealing section is in contact with the distal wall side mentioned above.

Examples of the invention are explained in more detail below with reference to the figures. The figures show:
- FIG 1: a cross-sectional view of a wall bushing, with a grommet with a cap element, which is in an installation position,
- FIG 2: the cross-sectional view according to FIG 1, in which the cap element is in a sealing position,
- FIG 3: an isometric view of the grommet with the strand passed through, with the cap element in the installation position,
- FIG 4: an isometric view analogous to FIG 3, but with the cap element in the sealing position,
- FIG 5: a sectional view of a cut perpendicular to the insertion direction, in which the distal sealing section has corrugated sections formed by thicker and thinner wall sections,
- FIG 6: a sectional view of a cut perpendicular to the insertion direction, in which the corrugated sections of the distal sealing section are crenellated, and
- FIG 7: a sectional view of a cut perpendicular to the insertion direction, in which the corrugated sections of the distal sealing section are wave-shaped.

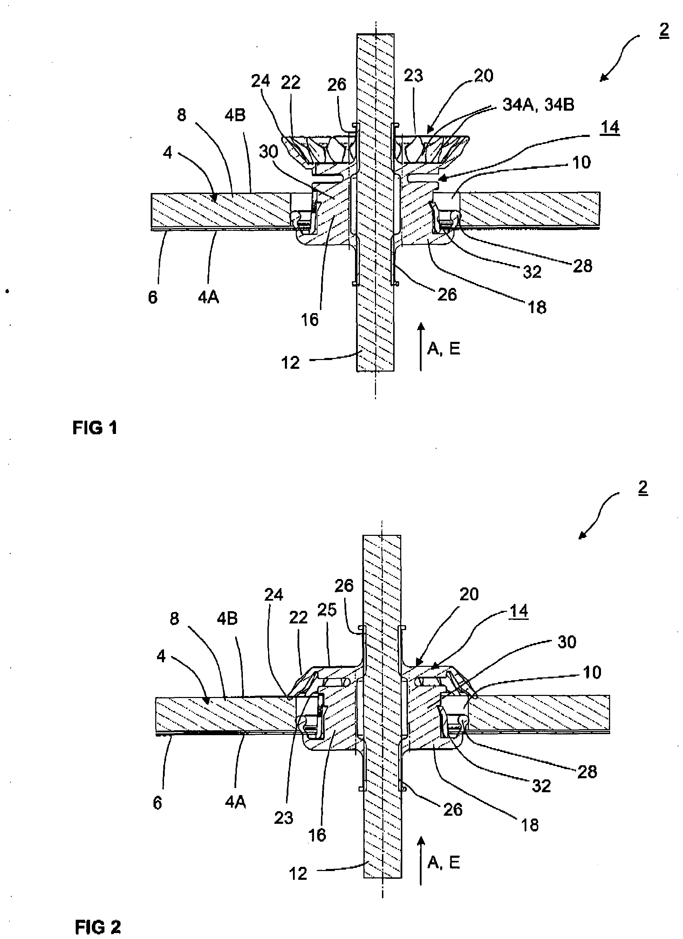

FIG 1 and FIG 2 each show a wall bushing 2 in a sectional view (cut parallel to an axial direction A). The wall bushing 2 has a wall 4, which is preferably formed in several layers with a mounting plate 6 and an (acoustic) insulation 8 attached to it. The wall 4 has an opening 10, through which an elongated strand 12 is passed, which is formed in particular as an electrical cable.

The strand 12 extends along the axial direction A. It is guided through the opening 10 in a sealed manner with the aid of a grommet 14. The grommet 14 has a grommet body 16 produced as a one piece element by a moulding process, which is made of an elastic material, such as EPDM or another suitable material.

The grommet body 16 also extends in the axial direction A, namely in an insertion direction E, which extends parallel to the axial direction A. The grommet body 16 has a proximal sealing section 18 and a distal sealing section 20. This is spaced from the proximal sealing section 18 in insertion direction E. In particular, the distal sealing section 20 has a cap element 22, which has a cap opening 23 on one side. A circumferential edge of the distal sealing section 20 and thus of the cap opening 23 forms a circumferential distal sealing lip 24. The cap element 22 is moulded centrally on a base element 25. In the example described, the base element 25 is plate-shaped and a guide sleeve 26 is formed in its centre.

A guide sleeve 26 is formed on each of the two sealing sections 18, 20, through which the strand 12 is guided in a sealing manner.

The proximal sealing section 18 has a proximal sealing lip 28, which is specially designed as a resilient sealing lip, as described, for example, in EP 4 148 310 A1.

The grommet body 16 also has a central section 30, with which it plunges into the opening 10 in the assembled state. A ring element 32 is preferably fitted around this central section 30, in particular a resilient ring element which is made of metal, for example.

In the cross-sectional views of FIG 1 and FIG 2, the proximal sealing lip 28 is arranged within the opening 10. Alternatively, and normally, this proximal sealing lip 28 is elastically pressed against the wall 4 from the outside, specifically against a proximal wall side 4A, thereby surrounding the opening 10.

For assembly, the pre-assembled unit consisting of grommet 14 and strand 12 is inserted into the opening 10 in the insertion direction E and partially pushed through it so that the distal sealing section 20 is pushed completely through the opening 10.

The cap element 22 is in an installation position shown In FIG 1, in which the cap opening 23 is orientated in the insertion direction E.

After inserting the grommet 14 into the opening, the cap element 22 is folded over so that the cap opening 23 is subsequently in a sealing position, as shown in FIG 2. In this position, the cap opening 23 is orientated towards the wall 4 and the distal sealing lip 24 is in sealing contact with a distal wall side 4B of the wall 4.

it is also of particular importance that the distal sealing section 20 and in particular the cap element 22 is corrugated in the circumferential direction U and thus perpendicular to the insertion direction E.

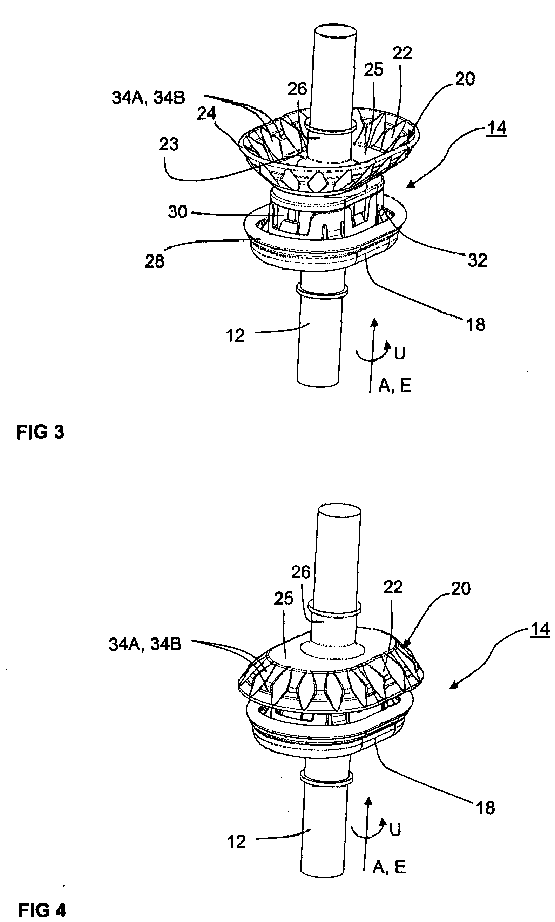

FIG 3 and FIG 4 show isometric representations of the prefabricated grommet 14 with the strand 12 passed through it. As it can be seen, the grommet 14 has an oval shape / oval cross section. Alternatively, the grommet 14 has a round shape with a circular cross section.

FIG 3 shows a prefabricated position of the grommet 14, in which the cap element 22 is in the installation position. By prefabricated position is meant the position in which the grommet body 16 is produced during casting and with the aid of the mould. In contrast, FIG 4 shows the grommet 14 after the cap element 22 has been folded over into the sealing position.

The isometric representations according to FIG 3 and FIG 4 clearly show the undulating configuration in the circumferential direction U. The corrugated configuration generally forms a corrugated structure with corrugated sections 34A, 34B, whereby these are formed by elevations and depressions alternating periodically in the circumferential direction U.

FIG 3 and FIG 4 show a variant in which the individual corrugated sections 34A, 34B have a varying width in the axial direction A and thus perpendicular to the circumferential direction U. In particular, one type of corrugated section 34A is bulbous. In this case, the corrugated sections 34A have a maximum width in their centre and taper at their two end sides. In particular, the corrugated sections 34A in the example shown are approximately diamond-shaped or rhombic.

In the example of FIG. 3 and FIG. 4, the individual corrugated sections are preferably formed by thicker wall sections and thinner wall sections, so that the material thickness varies in the circumferential direction. The diamond-shaped corrugated sections 34A, for example, are formed by the thinner wall sections, so that folding zones are formed. Specifically at these folding zones the cap element 22 can be folded in the circumferential direction so that it can be easily guided through the opening 10.

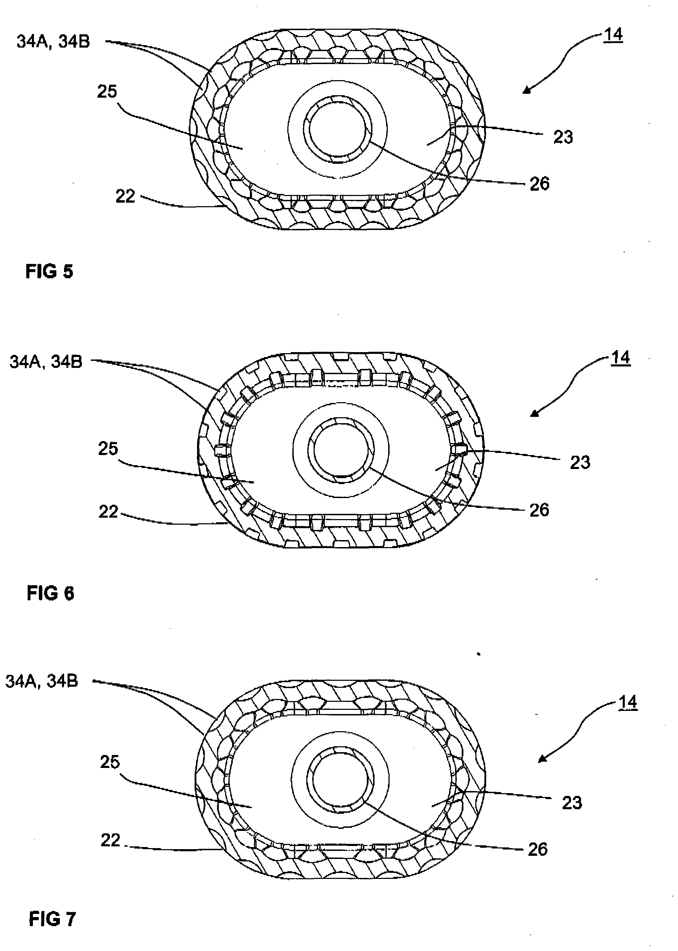

FIG 5 shows a view of a cross-section perpendicular to the axial direction A and thus perpendicular to the insertion direction E, looking from above at the cap element 22 as shown in FIG 3. The central base element 25 and the guide sleeve 26 can be seen in the centre.

The thinner wall sections (e.g. the corrugated sections 34A) and the thicker wall sections (e.g. the corrugated sections 34B) can be clearly recognised from this cross-sectional view. Overall, this results in the wave-like, corrugated structure.

FIG 6 and FIG 7 show sectional views analogous to FIG 5 of alternative variants for the corrugated structure. The distal sealing section 20 and therefore the corrugated sections 34A, 34B according to FIG 6 show a crenellated structure, with essentially rectangular elevations and depressions.

The distal sealing section 20 and therefore the corrugated sections 34A, 34B according to FIG 7 show a wave-shaped structure, having curved sections and an overall sinusoidal course, for example.

The grommet 14 described here particularly can easy to be mounted. Due to the corrugated design of the distal sealing section 20 in the circumferential direction U, it can be easily compressed during assembly and thus easily pushed through the opening 10.

Since the installation position (in which the cap opening 23 is orientated in the insertion direction E) is the prefabricated normal position, the effort and therefore the time required to assemble the prefabricated unit consisting of grommet 14 and strand 12 is low. The prefabricated unit is delivered to the assembly location for the motor vehicle, for example.

The assembly sequence described here, with the distal sealing section 20 being passed through with the cap element 22 in the installation position and the subsequent folding over into the sealing position, also ensures simple assembly, in which a sealing contact of the distal sealing lip 24 with the distal wall side 4B is ensured. This avoids assembly errors in particular. Finally, the previously described auxiliary tabs are also dispensed with, thus saving material.

### List of reference symbols

- 2: wall bushing
- 4: Wall
- 4A: proximal wall side
- 4B: distal wall side
- 6: mounting plate
- 8: insulation
- 10: opening
- 12: strand
- 14: grommet
- 16: grommet body
- 18: proximal sealing section
- 20: distal sealing section
- 22: cap element
- 23: cap opening
- 24: distal sealing lip
- 25: base element
- 26: guide sleeve
- 28: proximal sealing lip
- 30: central section
- 32: ring element
- 34A, 34B: corrugated sections

- A: axial direction
- E: insertion direction
- U: circumferential direction

## Claims

1. Grommet (14), in particular for a vehicle, for the sealed passage of a strand (12), in particular a cable, through an opening (10) in a wall (4), having a grommet body (16) which extends in an insertion direction (E) and which has a distal sealing section (20), wherein the distal sealing section (20) is elastically formed so that it is compressible and can be inserted through the opening (10) in the insertion direction (E), **characterised in that** the distal sealing section (20) is corrugated in the circumferential direction (U).

2. Grommet (14) according to the preceding claim, **characterised in that** the distal sealing section (20) has alternating corrugated sections (34A, 34B) in the circumferential direction, especially elevations and depressions, which are preferably evenly distributed around the entire circumference.

3. Grommet (14) according to the preceding claim, **characterised in that** the corrugated sections (34A, 34B) are formed by thicker wall sections and thinner wall sections, the thinner wall sections having a reduced wall thickness compared to the thicker wall sections.

4. Grommet (14) according to one of claims 2 to 3, **characterised in that** 20 to 50 corrugated sections (34A, 34B) are distributed around the circumference.

5. Grommet (14) according to one of claims 2 to 4, **characterised in that** the corrugated sections (34A, 34B) have a varying width in the insertion direction (E).

6. Grommet (14) according to one of claims 2 to 5, **characterised in that** the corrugated sections (34A, 34B) have a central thickening and are in particular rhombic in the insertion direction (E).

7. Grommet (14) according to one of the preceding claims, **characterised in that**, viewed in a section perpendicular to the insertion direction (E), the distal sealing section (20) optionally has a crenellated, triangular or wave-shaped structure.

8. Grommet (14) according to one of the preceding claims, **characterised in that** the distal sealing section (20) has a cap element (22).

9. Grommet (14) according to the preceding claim, **characterised in that** the cap element (22) adjoins a base element (25) in such a way that a cap opening (23) can be folded over from an installation position, in which the cap opening (23) is oriented in the insertion direction (E), into a sealing position, in which the cap opening (10) is oriented in the opposite direction.

10. Grommet (14) according to the preceding claim, **characterised in that** the installation position is a prefabricated position which the grommet (14) assumes after its manufacture.

11. Grommet (14) according to one of the claims 8 to 10, **characterised in that** the cap element (22) has a circumferential edge which forms a distal sealing lip (24) with which the distal sealing section (20), in the assembled state, bears against a distal wall side (4B) and circumferentially around the opening (10).

12. A wall bushing (2) comprising a wall (4) having an opening (10) through which a strand (12) is passed in a sealed manner by means of a grommet (14) according to any one of the preceding claims, wherein the distal sealing section (20) seals the opening (10) at a distal wall side (4B).

13. Wall bushing (2) according to the preceding claim, in which the wall (4) has a mounting plate (6) and an (acoustic) insulation (8) attached thereto, and the distal sealing section (20) rests on the insulation (8) with a distal sealing lip (24).

14. A method for producing a wall bushing (2) according to one of the two preceding claims, wherein the grommet (14) is passed through the opening (10) with the distal sealing section and wherein the distal sealing section (20) seals the distal wall side (4B).

15. Method according to the preceding claim, in which the distal sealing section (20) has a cap element (22) which has a cap opening (23), the cap element (22) being in an installation position when passing through the opening (10), in which the cap opening (23) is orientated in the insertion direction (E), the cap element (22) then being folded over so that the cap opening (23) is orientated in the direction of the distal wall side (4B).
